**Europäisches Patentamt**

**European Patent Office**

**Office européen des brevets**

(19)

(11) Veröffentlichungsnummer: **0 307 740 B1**

(12) **EUROPÄISCHE PATENTSCHRIFT**

(45) Veröffentlichungstag der Patentschrift: **28.10.92**

(51) Int. Cl.⁵: **B24B 3/60**

(21) Anmeldenummer: **88114399.4**

(22) Anmeldetag: **03.09.88**

(54) **Gerät zum Schärfen von Paradontalinstrumenten.**

(30) Priorität: **17.09.87 CH 3593/87**

(43) Veröffentlichungstag der Anmeldung:
**22.03.89 Patentblatt 89/12**

(45) Bekanntmachung des Hinweises auf die
Patenterteilung:
**28.10.92 Patentblatt 92/44**

(84) Benannte Vertragsstaaten:
**DE FR GB IT**

(56) Entgegenhaltungen:
**EP-A- 0 128 829**
**US-A- 2 578 309**

(73) Patentinhaber: **MIKRONA AG**
**Weingartenstrasse 8**
**CH-8957 Spreitenbach(CH)**

Patentinhaber: **Römhild, Ludwig, Dr.**
**Am Kugelfeld 3**
**W-8240 Berchtesgaden(DE)**

(72) Erfinder: **Hartmann, Erwin**
**Gugelweg 15**
**CH-5115 Möriken(CH)**
Erfinder: **Römhild, Ludwig, Dr.**
**Am Kugelfeld 3**
**W-8240 Berchtesgaden(DE)**
Erfinder: **Reinhard, Peter**
**Weingartenstrasse 8**
**CH-8957 Spreitenbach(CH)**

(74) Vertreter: **EGLI-EUROPEAN PATENT ATTOR-
NEYS**
**Horneggstrasse 4**
**CH-8008 Zürich(CH)**

## Beschreibung

Die Erfindung betrifft ein Gerät zum Schärfen der Schneide von in einem Halter eingespannten Scalern und andern Parodontalinstrumenten mit einer motorisch angetriebenen Schleifscheibe.

Der Wurzelglättung kommt bei der Therapie der Parodontalerkrankungen eine Schlüsselrolle zu. Die biologische Voraussetzung zur Regeneration des erkrankten Parodonts kann nur durch sorgfältige Reinigung der bakteriell verseuchten Zahnwurzel geschaffen werden. Voraussetzung dafür ist nicht nur die Kenntnis vom Gebrauch des Parodontal-Instrumentariums, sondern auch dessen permanente Instandhaltung, d.h. die Erhaltung scharfer Schneidekanten auch während des parodontalchirugischen Eingriffs.

Das Schleifen der Schneidkanten von Parodontalinstrumenten von Hand ist bisher die einzige Möglichkeit zu einer ausreichenden Schärfe der Instrumente zu gelangen. Jedoch hat diese Methode spezifische Nachteile. Der Mensch ist mit seiner Hand, seinem Auge und seinem räumlichen Vorstellungsvermögen nicht in der Lage, einen Handschleifstein immer im korrekten Winkel an die winzigen Schneiden der Parodontalinstrumente anzulegen, geschweige denn diesen Winkel beim Schleifen und Führen beizubehalten. Es ist deshalb ein hohes Mass an Uebung und Geschicklichkeit erforderlich, um beim Handschleifen auch nur ein durchschnittliches Ergebnis zu erreichen. Weiter ist eine optische Kontrolle unmöglich, was durch die geringe Grösse der Schneiden bedingt ist. Diese Voraussetzungen führen bei jedem neuen Schliff zu einer neuen Schliffacette, die erst durch den Abtrag von viel Material korrigiert werden kann. Zudem kommt es durch das Auf- und Abführen des Schleifsteins bei der Aufwärtsbewegung des Steins zu einer erheblichen Gratbildung. Der Druck des Steins auf die Schneide ist dabei dem Gefühl überlassen. Als Ergebnis ist somit festzustellen, dass die Pflege der Parodontalinstrumente durch Handschleifen zu einer ständigen negativen Veränderung von Form und Winkelgeometrie der Schneide führt. Die Aufzählung der "Schleiffehler" in den entsprechenden Handbüchern spricht eine unmissverständliche Sprache über die vielfältigen Möglichkeiten, ein Instrument durch das Schleifen von Hand zu verschleifen.

Um diese Verhältnisse zu verbessern, wurde auch eine rotierende, motorisch angetriebene Schleifscheibe verwendet, wobei eine Stütze zum Abstützen der Hand der Bedienungsperson oder des Instrumentes verwendet wurde. Da aber noch zuviele Einflüsse verbleiben, die allein vom Geschick der Bedienungsperson abhängen, haben auch diese Hilfsmittel kaum etwas an der Problematik des Schärfens der Parodontalinstrumente ändern können.

Aus der US-A-2 578 309 ist ein Schleifgerät gemäss dem Oberbegriff des Anspruchs 1 bekannt, bei welchem das zu schleifende Gerät unter einstellbaren Winkeln zur Schleifscheibe fest eingespannt werden kann. Auf diese Weise kann jedoch mit jeder Einstellung jeweils nur ein ebener Abschnitt der Geräteoberfläche nachgeschliffen werden.

Der Erfindung liegt die Aufgabe zugrunde, ein gattungsgemässes Schleifgerät anzugeben, mit dem es möglich ist, auch bei komplizierterem Verlauf der Geräteoberfläche und der Schneidkante das Nachschärfen der letzteren reproduzierbar, d. h. mit immer gleichen Schleifwinkeln auszuführen sowie ein Verfahren zum Betrieb eines solchen Schleifgeräts.

Ein Ausführungsbeispiel der Erfindung ist in der Zeichnung dargestellt und nachfolgend beschrieben. Es zeigen:

Fig. 1 eine Seitenansicht eines Scalers in vergrösserter Darstellung,

Fig. 2 einen Querschnitt des Scalers nach Fig. 1 längs der Linie II - II in Fig. 1 in vergrössertem Massstab,

Fig. 3 eine Seitenansicht eines Gerätes zum Schärfen der Schneidkante von Parodontalinstrumenten,

Fig. 4 eine zur Ansicht von Fig. 3 um 90° gedrehte Seitenansicht des Gerätes nach Fig. 1,

Fig. 5 einen Schnitt des Gerätes nach Fig. 3 längs der Linie V-V in Fig. 4,

Fig. 6 eine Ansicht eines Halters zum Einspannen von Parodontalinstrumenten zum Schärfen der Schneide mit dem Gerät nach Fig. 3 - 5 und

Fig. 7 einen Längsschnitt einer Schleifscheibe mit einer Mitnehmer- und Führungswelle.

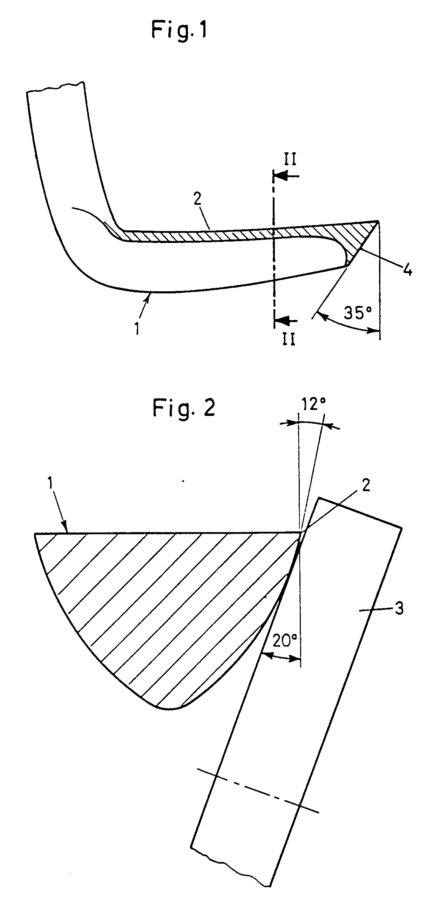

In Fig. 1 ist die Schneide 1 eines Scalers in der Seitenansicht dargestellt. Die Schneide 1 weist, siehe Fig. 2, einen angenähert dreieckförmigen Querschnitt auf. Mit 2 ist die Schneidkante bezeichnet, welche je nach Bedarf nachgeschärft werden muss. Das noch zu beschreibende Gerät ermöglicht eine reproduzierbare Bearbeitung der Schneidkante 2. In einer ersten Operation wird mit einer größeren Schleifscheibe 3 ein Hinterschliff von 20° geschliffen. Dieser Winkel kann gegebenenfalls zwischen 10° und 25° variieren. Mit derselben Scheibe wird auch die Schneidenspitze 4 auf ihrer Unterseite mit einem Winkel von rund 35° geschliffen. Auf der Hinterschliff erfolgt mit einer feineren Schleifscheibe der Fasenschliff, welcher in unmittelbar Nähe der Schneidkante 2 mit einem Winkel von rund 12° erfolgt. Der Fasenschliff ist als schraffierte Fläche in Fig. 1 dargestellt. Der Fasenschliff kann bis zur Schneidenspitze 4 durchgeführt werden, wo der Fasenschliff in eine breitere Fläche ausläuft.

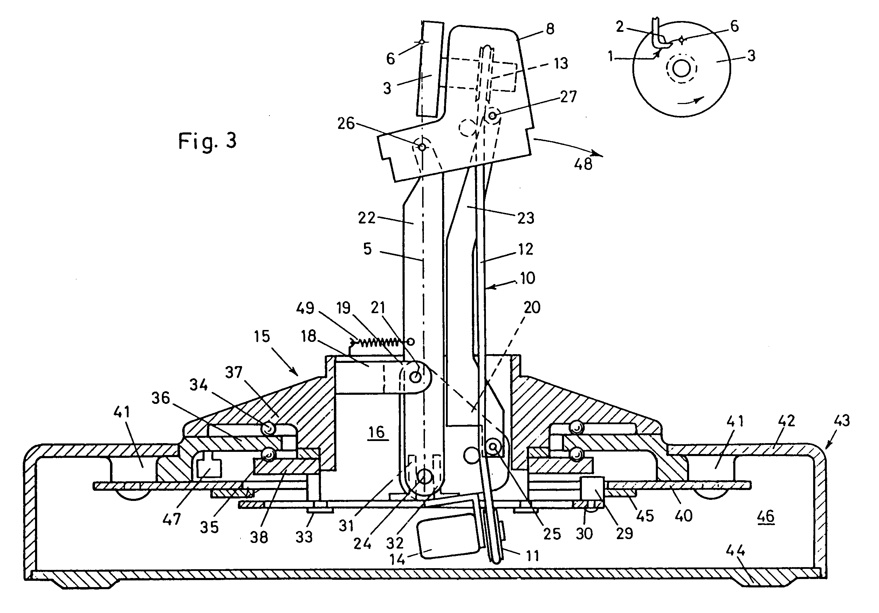

Zum Schleifen der Schneidkante 2 wird das in Fig. 3 - 5 dargestellte Gerät verwendet. Die Schleifscheibe 3 befindet sich im Zentrum eines Drehsystems mit einer senkrechten Drehachse 5, deren Kreuzungspunkt 6 mit der Schleifscheibe 3 im oberen Teil derselben liegt und zur Drehachse der Schleifscheibe 3 versetzt ist, siehe die Nebenfigur der Schleifscheibe 3 mit der Scalerschneide 1. Die Drehrichtung der Schleifscheibe erfolgt immer gegen die Schneidkante 2.

Die Schleifscheibe 3 ist in einen Sockel 8 drehbar gelagert und über einen Hülltrieb 10 mit einem tiefergelegenen Antriebsritzel 11, einem Hüllglied 12, beispielsweise einer mit Kugeln besetzten Saite , und einem Abtreibsrad 13 von einem Elektromotor 14 angetrieben, der ebenfalls zum Drehsystem des Gerätes gehört.

Das Drehsystem des Gerätes besteht im wesentlichen aus einem Drehsupport 15, der eine zentrale Oeffnung 16 aufweist. In die Oeffnung 16 ragt ein Tragarm 18 mit zwei Schenkeln 19, zwischen welchen eine Trägerplatte 20 in einer horizontalen Drehachse 21 schwenkbar gelagert ist.

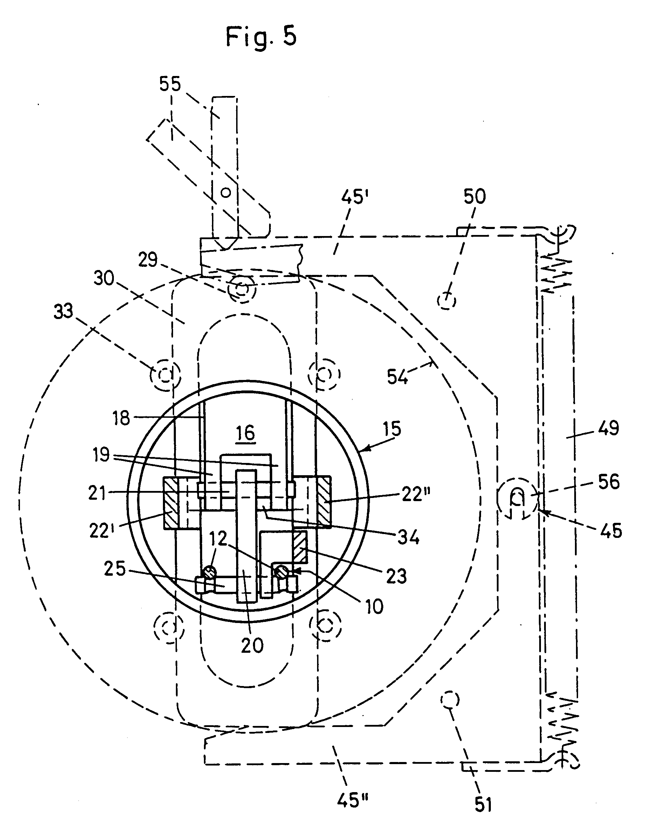

Im untern Teil der Trägerplatte 20 sind zwei Träger 22, 23 mit Drehachsen 24, 25 angelenkt. Am obern Ende sind die Träger 22, 23 im Sockel 8 mit Drehachsen 26, 27 angelenkt. Die Träger 22, 23 bilden mit ihren Drehachsen 24 - 27 ein Parallelogramm. Wird die Drehachse 24 des Trägers 22 seitlich verschoben, wird dadurch die Trägerplatte 20 geschwenkt, was ein Schwenken des Sockels 8 bewirkt. Das Verschieben des Trägers 22 erfolgt mit Hilfe einer horizontalen Kulisse 30, an welcher Mitnehmerarme 31, 32 angeformt sind, die die Drehachse 24 beidseits umfassen. Die Kulisse 30, die als Rahmen ausgebildet ist, siehe Fig. 5, ist in Führungsrollen 33 geführt, die am Drehsupport 15 befestigt sind.

Der Drehsupport 15 ist mittels zwei Kugelkränzen 34, 35 an einem ortsfesten Lagerflansch 36 mittels eines oberen und eines unteren drehbaren Lagerflansches 37, 38 abgestützt.

Der ortsfeste Lagerflansch 36 ist auf einer Montageplatte 40 befestigt, die ihrerseits an Zapfen 41 angeschraubt ist, die an einem Gehäuseflansch 42 befestigt sind. Der Gehäuseflansch 42 ist ein Teil eines Gehäuses 43, das mittels Füssen 44 auf einer Unterlage abgestellt werden kann.

Auf der Unterseite der Montageplatte 40 ist eine Schablone 45 angeordnet, an welcher eine an der Kulisse 30 angeordnete Fühlerrolle 29 sich beim Drehen des Drehsystems abrollt. Unter dem ortsfesten Lagerflansch 36 ist ein Sperring 47 drehbar gelagert, der zur Umsteuerung der Drehrichtung des Motors 14 dient. Wie aus der Nebenfigur von Fig. 3 ersichtlich ist, erfolgt die Drehrichtung der Drehscheibe 3 immer gegen die Schneidkante 2 des Scalers. Wird mit der Schleifscheibe 3 die Schneidenspitze 4 umfahren, muss, damit die Scheibe immer gegen die Schneidenkante läuft, die Drehrichtung umgekehrt werden. Das gesamte Drehsystem setzt sich sich somit aus dem Drehsupport 15 der Trägerplatte 20, den beiden Trägern 22, 23 und der Kulisse 30 zusammen.

In Fig. 3 ist der Motor 14 im Gehäuse 43 untergebracht. Er könnte jedoch ebenfalls direkt am Sockel 8 befestigt werden, so dass dann auf den Hülltrieb 10 verzichtet werden könnte. Die Träger 22, 23 können vom Kreuzungspunkt 6, in welchem sich auch die Scalerschneide 1 befindet, in Pfeilrichtung 48 weggeschwenkt werden. Durch eine weiche Feder 49 werden die Träger 22, 23 wieder in die Normallage geschwenkt, der jedoch nur eingehalten wird, wenn auch ein Werkzeug sich im Kresuzungspunkt 6 befindet.

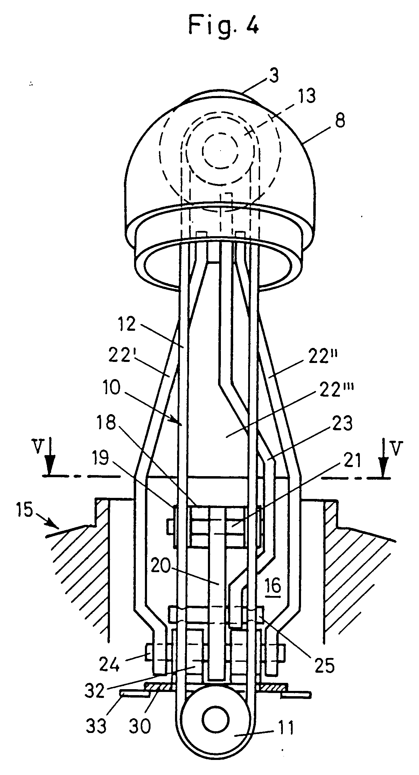

Aus Fig. 4 ist ersichtlich, dass der Träger 22 aus zwei Teilträgern 22$'$, 22$''$ besteht, die durch eine Wand 22$'''$ fest miteinander verbunden sind.

Aus Fig. 4 ist weiter ersichtlich, dass der Sockel 8 eine abgerundete Form aufweist, die in eine Zylinderpartie übergeht. An dieser schliesst ein konisches, nicht dargestellter Faltenbalg an, das in die Oeffnung 16 des Drehsupportes 15 ragt.

Aus Fig. 5 ist ersichtlich, dass die Fühlerrolle 29 an der Schablone 45 entlangbewegt wird, die aus zwei Teilen 45$'$, 45$''$ zusammengesetzt ist. Die beiden Teile sind um eine Schwenkachse 50, 51 schwenkbar. Eine weitere kreisförmige feste Schablone 54 dient dazu, die Schleifscheibe 3 mit einem Winkel von 35° um die Schneidenspitze 4 zu bewegen. Der übrige Bereich der Schablone dient dazu, den Winkel für den Hinterschliff und den Fasenschliff einzuhalten. Die beiden Operationen müssen jedoch getrennt durchgeführt werden. Hierzu wird die Schablone mit Hilfe eines Hebels 55 eingeschwenkt, siehe die gestrichelte Kontur im obern Teil von Fig. 5. An den Stossflächen der beiden Schablonenteile 45', 45" ist eine Deckplatte 56 angeordnet, welche der Führung der beiden Schablonenteile 45', 45" dient.

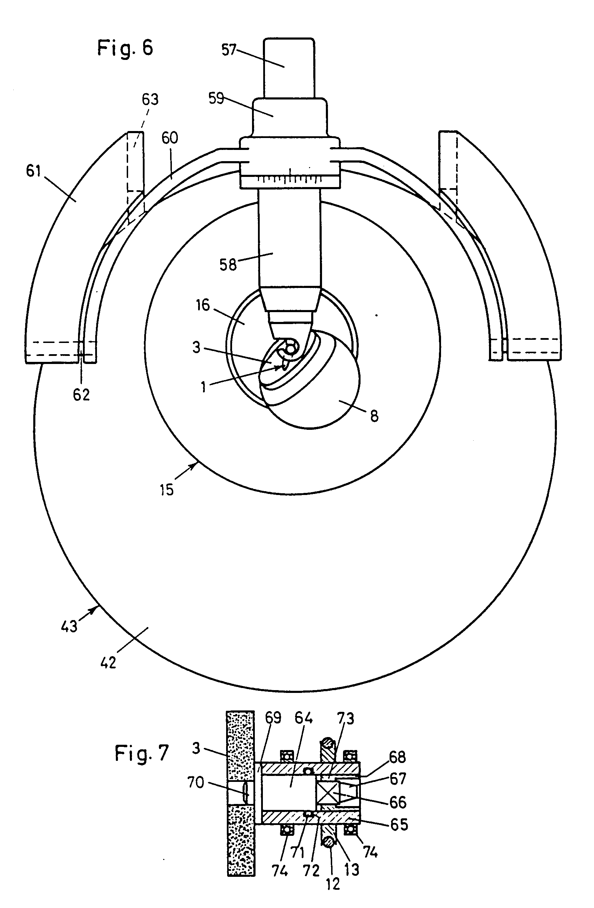

In Fig. 6 ist die Haltevorrichtung für das feste Einspannen der Parodontalinstrumente dargestellt. Das Parodontalinstrument wird mit seiner Schneide 1 mittels eines Klemmgriffes 57 in einem Haltearm 58 eingespannt. Der Haltearm 58 ist in einem Drehsockel 59 drehbar gelagert, damit die Schneide 1 in jede gewünschte Lage gebracht werden kann. Der Drehsockel 59 ist in zwei Schwenkarmen 60 drehbar gelagert, die ihrerseits in zwei festen Armen 61 schwenkbar gelagert sind. Die Schwenkachse 62 der Schwenkarme 60 schneidet den Kreuzungspunkt 6, wie auch der Haltearm 58 mit seiner Einspannung den Kreuzungspunkt 6 schneidet.

Die festen Arme 61 sind an Säulen 63 befestigt. Die Säulen 63 sind mit dem Gehäuse 43 fest verbunden.

Zusätzlich zu den gezeigten Schwenk- und Drehmöglichkeiten ist der Haltearm 58 um einige Winkelgrade in dem Drehsockel 59 schwenkbar.

In Fig. 7 ist die Ausbildung der Schleifscheibe 3 und ihre Lagerung dargestellt. Die Schleifscheibe 3 ist mit einer Mitnehmer- und Führungshülse 65 fest verbunden, z.B. durch Kleben der Scheibe 3 an einen Wellenflansch 69 mit einem Zentrierzapfen 70. Die Welle 64 weist einen Mitnehmer 66, z.B. einen Vierkant auf, an den ein kegelförmiges Endstück 67 anschliesst, wodurch die Welle 64 leicht in eine Mitnehmer- und Führungshülse 65 eingesetzt werden kann. In der Hülse 65 ist ein Weichdichtungsring 71 in einer Nut 72 angeordnet, die als Halter für die Schleifscheibe 3 dient. Der von dem Weichdichtungsring 71 ausgeübte Druck auf die Welle 64 hat sich als ausreichend erwiesen, um das Trennen der Welle 64 von der Hülse 65 zu vermeiden. Zudem wird die Schleifscheibe durch das eingespannte Parodontalinstrument am Herausfallen gehindert. In der Bohrung der Hülse 65 ist eine Mitnehmerhülse 68 eingesetzt, die einen Schlitz 73 aufweist, in welchen der Vierkant eingesetzt wird. Die Mitnehmerhülse 68 ist mit der Mitnehmer- und Führungshülse 65 fest verbunden, z.B. durch Kleben. Die Hülse 65 ist mit Lagern, z.B. Wälzlagern 74 im Sockel 8 des beschriebenen Gerätes drehbar gelagert, auf der Hülse 65 ist ein Antriebsrad 13 gelagert, das das Abtriebsrad des Hülltriebes 10 des beschriebenen Gerätes sein kann.

Das Schärfen einer Schneidkante 2 eines Parodontalinstrumentes verläuft wie folgt. Das Instrument wird in den Haltearm 58 eingespannt, bis die Schneide im Kreuzungspunkt 6 liegt. Nur wenn auch das Instrument vorhanden ist, wird die Schleifscheibe 3 in die richtige Winkellage gebracht, d.h. in den Kreuzungspunkt 6. Nun wird zunächst der Hinterschliff mit einer gröberen Schleifscheibe 3 ausgeführt, wobei die Schablone 45 in der ausgezogenen Lage liegt. Durch Drehen des Drehsystems wird die gesamte Schneide bestrichen, wobei gleichzeitig durch die feste Schablone 54 die Schneidenspitze 4 mit einem Winkel von 35° bearbeitet wird. Anschliessend wird die Schleifscheibe 3 gegen eine feinere Scheibe ausgewechselt und der Planschliff vorgenommen, wozu die beiden Teilschablonen 45, 45' in die gestrichelte Lage in Fig. 5 mit dem Hebel 55 gebracht werden. Auch in diesem Fall wird die Schneidenspitze 4 mit einem Winkel 35° bearbeitet, da die Lage der Schablone 54 auch bei eingeschwenkten Teilschablonen 45', 45" unverändert bleibt und abgetastet wird. Vorteilhaft ist, dass jede Schleifoperation genau gleich ausgeführt wird, da auch der Anpressdruck durch die Feder 49 unbeeinflusst von einem manuellen Eingriff ist.

**Patentansprüche**

1. Gerät zum Schärfen der Schneide (1) von in einem Halter (58) fest eingespannten Scalern und anderen Parodontalinstrumenten, mit einer motorisch angetriebenen Schleifscheibe (3), **dadurch gekennzeichnet, dass** die Schleifscheibe (3) auf einem von einem ersten Träger (22) und einem zweiten Träger (23) getragenen Sockel (8) gelagert ist und die beiden Träger (22, 23) eine Parallelogrammverbindung mit vier Gelenken (24, 25, 26, 27) bilden, wobei die oberen Gelenke (26, 27) im Sockel (8) und die unteren Gelenke (24, 25) an einer vertikalen Trägerplatte (20) angeordnet sind, die ihrerseits an einem mit einem Drehsupport (15) fest verbundenen Tragarm (18) um eine horizontale Achse drehbar gelagert ist, wobei an dem Drehsupport (15) eine Kulisse (30) verschiebbar gelagert ist, die mit dem unteren Ende des ersten Trägers (22) gelenkig verbunden ist, sodass die an einer ortsfesten Schablone (45, 54) bei der Drehung des Drehsupports (15) entlanggeführte Kulisse (30) ihre Bewegungen auf den ersten Träger (22) überträgt und dadurch die Neigung des Sockels (8) und der Schleifscheibe (3) bezüglich ihrer Lage zu der fest eingespannten Schneide eines Parodontalinstrumentes einstellt.

2. Gerät nach Anspruch 1, dadurch gekennzeichnet, dass die durch die beiden Träger (22, 23) gebildete Parallelogrammverbindung unter der Wirkung einer Feder (49) steht, die die Schleifscheibe (3) gegen die Schneide (1) drückt.

3. Gerät nach Anspruch 1 oder 2, dadurch gekennzeichnet, dass der Drehsupport (15) durch zwei Lagerflanschen (37, 38) und einen ortsfesten Lagerflansch (36) mittels eines oberen und eines unteren Kugelkranzes (34, 35) drehbar gelagert und in seiner Lage gehalten ist.

4. Gerät nach Anspruch 1, dadurch gekennzeichnet, dass der erste Träger (22) aus zwei miteinander fest verbundenen Teilträgern (22', 22") zusammengesetzt ist, zwischen denen die Trägerplatte (20) mittels eines Tragarmes (18) am Drehsupport (15) befestigt ist.

5. Gerät nach Anspruch 1, dadurch gekennzeichnet, dass der ortsfeste lagerflansch (36) an einer Montageplatte (40) befestigt ist.

6. Gerät nach Anspruch 5, dadurch gekennzeichnet, dass die Montageplatte (40) an einem Gehäuse (43) befestigt ist, welches einen Hohlraum (44) bildet, in welchem die Kulisse (30) und die Schablonen (45, 54) sowie Teile der Träger (22, 23) angeordnet sind.

7. Gerät nach Anspruch 6, dadurch gekennzeichnet, dass im Hohlraum (44) ein Antriebsmotor (14) für den Antrieb der Schleifscheibe (3) angeordnet ist, wobei als Leistungsübertragung ein Hülltrieb (10), z.B. ein Kugelsaitenantrieb, vorgesehen ist.

8. Gerät nach Anspruch 1, dadurch gekennzeichnet, dass die Schablone (45) in zwei Teilschablonen (45′, 45″) unterteilt ist, die um Schwenkachsen (50, 51) schwenkbar und durch eine Feder (49) zusammengehalten sind.

9. Gerät nach Anspruch 7, dadurch gekennzeichnet, dass die Teilschablonen (45′, 45″) durch eine Betätigungshebel (55) verstellbar sind, wodurch die Schleifscheiben (3) für verschieden Schleifwinkel einstellbar sind.

10. Gerät nach Anspruch 1, dadurch gekennzeichnet, dass die Drehachse (5) des Drehsupportes (15) bei eingespanntem Parodontalinstrument einen Kreuzungspunkt (6) auf der Schleifscheibe (3) schneidet, an dem auch die Schneide (1) des in einem Haltearm (58) eingespannten Parodontalinstrumentes anzuliegen bestimmt ist, wobei der Kreuzungskpunkt im obern Teil der Schleifscheibe und etwas seitlich des Scheitels angeordnet ist.

11. Gerät nach Anspruch 1, dadurch gekennzeichnet, dass der Haltearm (58) in einem Drehsokkel (59) gelagert ist, der in beidseits angeordneten Schwenkarmen (60) gelagert ist, welche sich über den Bereich des Drehsupportes (15) erstrecken, und in einer, den Kreuzungspunkt (6) schneidenden Achse (62) gelagert ist, wobei die Achse (62) in festen Armen (61) von Säulen (63) vorgesehen ist.

12. Gerät nach einem der Ansprüche 1 bis 11, **dadurch gekennzeichnet, dass** die Schleifscheibe (3) mit einer Mitnehmer- und Führungswelle (64) fest verbunden ist, welche in eine im Sockel (8) drehbar gelagerte Mitnehmer- und Führungshülse (65) einsteckbar ist.

13. Gerät nach Anspruch 12, **dadurch gekennzeichnet, dass** die Mitnehmer- und Führungswelle (64) einen Mitnehmer (66), z. B. einen Vierkant, aufweist, an den ein konisches Endstück (67) anschliesst und die Mitnehmer- und Führungshülse (65) eine Mitnehmerhülse (68) zur Aufnahme des Mitnehmers (66) aufweist.

14. Verfahren zum Betrieb eines Geräts nach einem der Ansprüche 1 bis 13, **dadurch gekennzeichnet, dass** die auf dem Drehsupport (15) gelagerte Schleifscheibe gedreht wird und hierbei die Schneide (1) an zwei Längsseiten und an einer Schneidspitze (4) bearbeitet wird, wobei in einer ersten Operation mit einer gröberen Schleifscheibe (3) ein Hinterschliff und anschliessend in einer zweiten Operation mit einer feineren Schleifscheibe (3) ein Fasenschliff an der Schneide (1) ausgeführt wird.

## Claims

1. Device for sharpening the cutting edge (1) of scalers and other paradental instruments, firmly clamped in a holder (58), having a motor-driven grinding disc (3), characterised in that the grinding disc (3) is mounted on a base (8) which is supported by a first carrier (22) and a second carrier (23) and the two carriers (22, 23) form a parallelogram connection with four links (24, 25, 25, 27), with the upper links (26, 27) being arranged in the base (8) and the lower links (24, 25) being arranged on a vertical carrier plate (20) which, for its part, is rotatably mounted about a horizontal axis on a carrying arm (18) which is fixedly connected to a rotary support (15), there being mounted on the rotary support (15) in a displaceable manner a connecting link (30) which is connected in an articulated manner to the lower end of the first carrier (22) So that the connecting link (30) which is guided along a stationary guide plate (45, 54) in the case of rotation of the rotary support (15) transmits its movements to the first carrier (22) and as a result adjusts the inclination of the base (8) and of the grinding disc (3) relative to their position to the fixedly clamped cutting edge of a paradental instrument.

2. Device according to claim 1, characterised in that the parallelogram connection formed by the two carriers (22, 23) is under the effect of a spring (49) which presses the grinding disc (3) against the cutting edge (1).

3. Device according to claim 1 or 2, characterised in that the rotary support (15) is rotatably mounted by two bearing flanges (37, 38) and a stationary bearing flange (36) by means of an upper and a lower ball bearing annulus (34, 35) and is held in its position.

4. Device according to claim 1, characterised in that the first carrier (22) is composed of two partial carriers (22', 22") which are fixedly connected together and between which the carrier plate (20) is secured by means of a carrying arm (18) on the rotary support (15).

5. Device according to claim 1, characterised in that the stationary bearing flange (36) is secured to a mounting plate (40).

6. Device according to claim 5, characterised in that the mounting plate (40) is secured to a housing (43) which forms a hollow space (44) in which the connecting link (30)and the guide plates (45, 54) and also parts of the carriers (22, 23) are arranged.

7. Device according to claim 6, characterised in that a drive motor (14) is arranged in the hollow space (44) to drive the grinding disc (3), an endless flexible drive (10), for example a ball string drive , being provided as power transmission.

8. Device according to claim 1, characterised in that the guide plate (45) is subdivided into two partial guide plates (45', 45") which can be swung about swivel axes (50, 51) and which are held together by means of a spring (49).

9. Device according to claim 7, characterised in that the partial guide plates (45', 45") can be adjusted by means of an actuating lever (55), whereby the grinding discs (3) are adjustable for various grinding angles.

10. Device according to claim 1, characterised in that the axis of rotation (5) of the rotary support (15), with paradental instrument clamped, cuts a point of intersection (6) on the grinding disc (3) at which the cutting edge (1) of the paradental instrument, clamped in a holding arm (58), is also intended to lie, with the point of intersection being arranged in the upper portion of the grinding disc and somewhat to the side of the apex.

11. Device according to claim 1, characterised in that the holding arm (58) is mounted in a rotary base (59) which is mounted in swivel arms (60), which are arranged on both sides and which extend over the region of the rotary support (15), the holding arm being mounted about an axis (62) which cuts the point of intersection (6), with the axis (62) being provided in fixed arms (61) of columns (63).

12. Device according to one of the claims 1 to 11, characterised in that the grinding disc (3) in fixedly connected with a carrier and guide shaft (64), which can be inserted into a carrier and guide sleeve (65) which is rotatably mounted in the base (8).

13. Device according to claim 12, characterised in that the carrier and guide shaft (64) has a carrier (66), for example a square, to which a conical end piece (67) connects, and the carrier and guide sleeve (65) has a carrier sleeve (68) for receiving the carrier (66).

14. Method for operating a device according to one of the claims 1 to 13, characterised in that the grinding disc which is mounted on the rotary support (15) is rotated and in this way the cutting edge (1) is worked on two longitudinal sides and at one cutting point (4), in which case in a first operation with a comparatively coarse grinding disc (3) relief produced by grinding is effected and subsequently in a second operation with a comparatively fine grinding disc (3) a chamfer produced by grinding on the cutting edge (1) is effected.

**Revendications**

1. Appareil pour l'affûtage du tranchant (1) d'une rugine montée fixement dans un support (58) et d'autres instruments parodontaux, avec une meule (3) à entraînement motorisé, caractérisé en ce que la meule (3) est logée sur le socle (8) supportée par un premier support (22) et un deuxième support (23) et les deux supports (22, 23) forment une jonction en parallélogramme avec quatre articulations (24, 25, 26, 27), puis en ce que les articulations supérieures (26, 27) sont disposées dans le socle (8) et les articulations inférieures (24, 25) sont disposées sur une plaque support verticale (20), qui, de son côté, est logée rotativement autour d'un axe horizontal sur un bras support (18) relié fixement à un support rotatif (15), en ce qu'une coulisse (30) est disposée d'une manière amovible sur le support rotatif (15), celle-ci étant reliée articulée avec l'extrémité inférieure du premier support (22), si bien que la coulisse (30) guidée le long de la règle directrice (45, 54) lors de la rotation du support rotatif (15) et transfère ses mouvements sur le premier support (22) et de ce fait règle l'inclinaison du socle (8) et de la meule (3) en ce qui concerne leur position vis à vis du tranchant monté fixement d'un instrument parodontal.

2. Appareil selon revendication 1, caractérisé en ce que la jonction par parallélogramme formée par les deux supports (22, 23) provoque sous l'effet d'un ressort (49), la pression de la meule (3) contre le tranchant (1).

3. Appareil selon revendication 1 ou 2, caractérisé en ce que le support rotatif (15) est supporté en rotation par deux brides de fixation (37, 38) et une bride de fixation fixe (36) au moyen d'une couronne sphérique supérieure et d'une couronne sphérique inférieure (34, 35) et est maintenu dans sa position

4. Appareil selon revendication 1, caractérisé en ce que le premier support (22) se compose de deux parties de supports (22', 22") reliées fixement entre elles, entre lesquelles la plaque support (20) est fixée au support rotatif (15) au moyen d'un bras support (18).

5. Appareil selon revendication 1, caractérisé en ce que la bride de fixation fixe (36) est fixée à une plaque de montage (40).

6. Appareil selon revendication 5, caractérisé en ce que la plaque de montage (40) est fixée à un carter (43), lequel forme une cavité (44) dans laquelle sont disposées la coulisse (30) et les règles directrices (45, 54) ainsi que les parties des supports (22, 23).

7. Appareil selon revendication 6, caractérisé en ce que dans la cavité (44) est disposé un moteur d'entraînement (14) pour l'entraînement de la meule (3), en ce qu'un organe d'entraînement (10), par exemple un entraînement à corde sphérique, est prévu comme transfert de puissance.

8. Appareil selon revendication 1, caractérisé en ce que la règle directrice (45) est divisée en deux règles directrices partielles (45', 45") qui sont orientables autour d'axes pivotants (50, 51) et qui sont maintenues l'une à l'autre par un ressort (49).

9. Appareil selon revendication 7 caractérisé en ce que les règles directrices partielles (45', 45") sont déplaçables par un levier d'actionnement (55), et en ce que les meules (3) sont réglables pour différents angles d'affûtage.

10. Appareil selon revendication 1, caractérisé en ce que l'axe de rotation (5) du support rotatif (15), lorsqu'un instrument parodontal est encastré, coupe le point de jonction (6) sur la meule (3), auquel le tranchant (1) de l'instrument parodontal fixé sur le bras support (58) est destiné également à être adjacent, et en ce que le point de jonction (6) est disposé dans la partie supérieure de la meule et quelque peu à côté du sommet.

11. Appareil selon revendication 1, caractérisé en ce que le bras support (58) est logé dans un socle rotatif (59), placé entre des bras orientables (60) disposés des deux côtés, et qui s'étendent au-dessus de la zone du support rotatif (15) et ce bras-support est aussi placé dans un axe (62) coupant le point de jonction (6), en ce que l'axe (62) est porté dans les bras fixes (61) des piliers (63).

12. Appareil selon l'une des revendications de 1 à 11, caractérisé en ce que la meule (3) est reliée fixement à un arbre de guidage et d'entraînement (64), lequel peut être inséré dans une douille de guidage et d'entraînement (65) logée en rotation dans un socle (8).

13. Appareil selon revendication 12, caractérisé en ce que l'arbre de guidage et d'entraînement (64) présente un tenon d'entraînement (66), par exemple un quatre-pans, auquel se raccorde une extrémité conique (67) et en ce qu'une douille de guidage et d'entraînement (65) présente une douille d'entraînement (68) pour la réception du tenon d'entraînement (66).

14. Procédé pour le fonctionnement d'un appareil selon l'un des revendications de 1 à 13. caractérisé en ce que la meule (3) logée sur le support rotatif (15) est tournée et de ce fait le tranchant (1) de deux faces longitudinales et celui d'une pointe de tranchant (4) sont traités, en ce qu'une dépouille est effectuée dans une première opération avec une meule (3) plus grossière et, par la suite dans une deuxième opération avec une meule (3) plus fine, on procède à l'affûtage du chanfrein sur le tranchant (1).

EP 0 307 740 B1

Fig. 1

Fig. 2

Fig. 3

## Fig. 4

# Fig. 5

Fig. 6

Fig. 7